# EUROPEAN PATENT SPECIFICATION

(11) **EP 0 862 167 B1**
(45) Date of publication and mention of the grant of the patent: **17.10.2001**
(21) Application number: 98301365.7
(22) Date of filing: 25.02.1998
(51) Int. Cl.: G11B 7/00, G11B 7/135

(54) **Optical recording/pickup head compatible with compact disk-recordable (CD-R) and digital versatile disk (DVD) using polarization beam splitter**
Optische Aufzeichnung/Wiedergabekopf kompatibel mit Compact-Disc beschreibbar (CD-R) und digitaler vielseitiger Scheibe (DVD) verwendend einen Polarisationsstrahlenteiler
Enregistrement optique/tête de lecture compatible avec de disque compact enregistrable (CD-R) et de disque numérique polyvalent (DVD) utilisant de séparateur de faiseaux polarisant

(30) Priority: 27.02.1997 KR 9706277
(43) Date of publication of application: 02.09.1998
(73) Proprietor: Samsung Electronics Co., Ltd., Suwon City, Kyungki-do (KR)
(72) Inventor: Lee, Chul-Woo, Yongsan-gu, Seoul (KR); Yoo, Jang-Hoon, Youngdungpo-gu, Seoul (KR); Chung, Chong-Sam, Pundang-gu, Sungnam-city, Kyungki-do (KR)
(74) Representative: Chugg, David John

(56) References cited:
- EP-A- 0 747 893
- US-A- 5 513 164
- PATENT ABSTRACTS OF JAPAN vol. 096, no. 006, 28 June 1996 & JP 08 055363 A (MATSUSHITA ELECTRIC IND CO LTD), 27 February 1996 & US 5 703 856 A (HAYASHI HIDEKI ET AL)

## Description

The present invention relates to an optical recording and/or pickup head compatible with optical disks using respective light beams of different wavelengths for recording and reproduction of information, and more particularly, to an optical recording/pickup head compatible with a compact disk-recordable (CD-R) and a digital versatile disk (DVD).

In the optical disk apparatus being a recording medium for storing a large quantity of information, a compact disk (CD) and a digital versatile disk (DVD) have been widely used. Recently, a recordable compact disk (CD-R) and a digital versatile disk - random access memory (DVD-RAM) have been known. As well known, when recording and reproduction of information, laser light having a wavelength of 780 nm is used for a CD-R, and laser light having a wavelength of 650 nm or 635 nm is used for a DVD-RAM. Thus, an optical recording/pickup head compatible with a CD-R and a DVD includes two light sources which emit laser light of respectively different wavelengths.

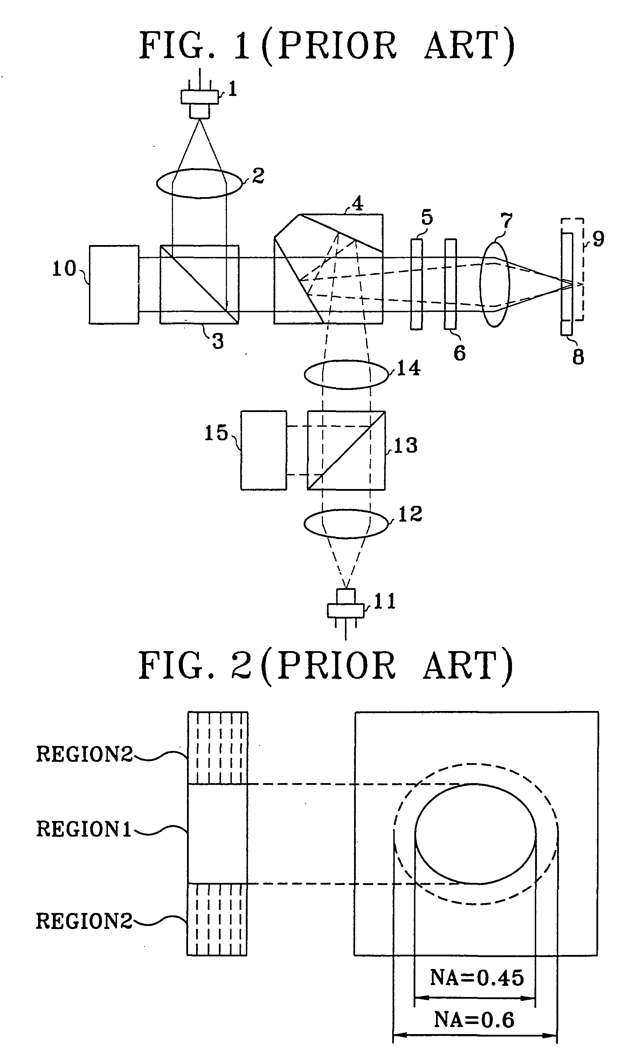

Figure 1 shows an existing optical recording/pickup head compatible with a CD-R and a DVD. The optical recording/pickup head includes a first light source 1 for emitting a first light beam having a wavelength of 650 nm for recording and reproduction of information with respect to a DVD 8, a second light source 11 for emitting a second light beam having a wavelength of 780 nm for recording and reproduction of information with respect to a CD-R 9, and an objective lens 7 for respectively focusing the beams of the first and second light emitted by the first and second light sources 1 and 11 on the information recording surfaces of the DVD 8 and the CD-R 9. A collimating lens 2 collimates the first light beam emitted from the first light source 1 into parallel light and transmits the collimated light to a first beam splitter 3. The first beam splitter 3 reflects the first light beam incident from the first collimating lens 2 to an interference filter prism 4. The interference filter prism 4 transmits the first light beam being the parallel light beam incident from the first beam splitter 3 to a quarter wavelength plate 5. In more detail, the interference filter prism 4 total transmits or total reflects the incident light beam according to a wavelength of the incident light beam, in which a first light beam of 650 nm wavelength for a DVD is totally transmitted and a second light beam of 780 nm wavelength incident from a focusing lens 14 is totally reflected. A thin-film type variable aperture 6 transmits the first light beam being the parallel light beam incident from the quarter-wave plate 5 to the objective lens 7. The objective lens 7 focuses the first light beam having passed through the variable aperture 6 on the information recording surface of the DVD 8 of 0.6 mm thick. As a result, the first light beam focused on and reflected from the information recording surface of the DVD 8 by the objective lens 7 contains information recorded on the focused position.

The reflected first light beam from the information recording surface of the DVD 8 passes through the objective lens 7, the variable aperture 6 and the quarter-wave plate 5 in sequence, and then is incident to the interference filter prism 4.

The interference filter prism 4 transmits the first light beam incident from the quarter-wave plate 5 to the first beam splitter 3. The first beam splitter 3 makes the first light beam incident from the interference filter prism 4 proceed to a first photodector 10. The first photodetector 10 receives the first light beam from the first beam splitter 3 and detects information from the first light beam.

A second light beam of the 780 nm wavelength emitted from the second light source 11 passes through a second collimating lens 12 and a second beam splitter 13, and then incident to a converging lens 14.

The converging lens 14 converges the second light beam incident from the second beam splitter 13 to transmit the second length beam to the interference filter prism 4 in the form of a converged beam.

The interference filter prism 4 transmits the second light beam incident from the converging lens 14 to the quarter-wave plate 5 in the diverging form. The quarter-wave plate 5 transmits the second light beam incident from the interference filter prism 4 to the variable aperture 6.

The variable aperture 6 transmits only part of the second light beam of the 780 nm wavelength being incident in the form of a divergent beam to the objective lens 7. Thus, the second light beam transmitted through the variable aperture 6 is focused on and reflected from the information recording surface of the CD-R 9 of 1.2 mm thick by the objective lens 7. The second light beam reflected from the information recording surface contains information recorded on the focused position.

The reflected first light beam from the information recording surface of the CD-R 9 passes through the objective lens 7, the variable aperture 6, the quarter-wave plate 5 in sequence, then is incident to the interference filter prism 4.

The interference filter prism 4 transmits the second light beam incident from the quarter-wave plate 5 to the converging lens 14. The converging lens 14 makes the second light beam incident to a second photodetector 15. The second photodetector 15 receives the second light beam from the second beam splitter 13 and detects information from the second light beam.

Figure 2 shows the thin-film type variable aperture 6 of the Figure 1 in detail. As shown in Figure 2, the thin-film type variable aperture 6 has the structure which can selectively transmit the light beams incident to the regions whose numerical aperture (NA) is less than or equal to 0.6. Region 1 is a region whose numerical aperture (NA) is less than or equal to 0.45 and which totally transmits the light beam of 780 nm wavelength and 650 nm wavelength. Region 2 is a region whose numerical aperture (NA) is more than 0.45 in which a dielectric thin-film is coated. Here, a multi-layered thin-film having a thickness less than or equal to a wavelength unit is formed in which the light beam having the wavelength of 650 nm is totally transmitted and that having the wavelength of 780 nm is totally reflected. The region 1 is comprised of a quartz (SiO₂) thin film to remove any optical aberration generated by the dielectric thin film coated region 2.

The 780 nm wavelength light passing through the region 1 having the 0.45NA or below in the variable aperture 6 forms a beam spot appropriate to the CD-R 9 on the information recording surface thereof by the objective lens 7. The 650 nm wavelength light transmitting the regions 1 and 2 having the 0.6 NA or below in the variable aperture 6 forms a beam spot appropriate to the DVD 8 on the information recording surface thereof by the objective lens 7.

The reason why the second light beam is incident to the objective lens 7 in the diverging form is to focus the second light beam on the information recording surface of the CD-R without having any optical aberration.

Thus, the optical recording/pickup head of Figure 1 enables recording and reproduction with respect to both a DVD and a CD-R.

However, the optical recording/pickup head of Figure 1 uses several prisms, and particularly uses the interference filter prism 4 and the converging lens 14 in order to form a finite optical system with respect to the second light beam, which causes an increase of production cost. Since the variable aperture 6 transmits only part of the second light beam incident form the quarter wave plate 5, a light utilization efficiency is lowered. Also, since the variable aperture 6 should be located on a particular position in order to obtain an optical spot appropriate for the CD-R 9 from the diverging second light beam, it is difficult to construct the optical system.

EP 747 893 discloses optical head apparatus for two or more different types of disc, comprising two light sources having different wavelengths and an objective lens for directing the two lights to the discs. A holographic optical element is provided to converge or diverge only one of the first or second light beams.

With a view to solve or reduce the above problems, it is an aim of preferred embodiments of the present invention to provide an optical recording/pickup head which provides a simple structure and a high light utilization efficiency of an optical system, by employing a polarizing beam splitter and a beam splitter having a high transmissivity and a high reflectivity in order to transmit light beams of respectively different wavelengths to an objective lens.

According to a first aspect of the present invention, there is provided an optical recording/pickup head compatible with at least two types of optical disks in which distances from the optical recording/pickup head to the information recording surfaces differ from each other and information is recorded and reproduced by light beams having a respectively different wavelength, the optical recording/pickup head comprising:
a first light source for emitting a linearly polarized first light beam; a second light source for emitting a linearly polarized second light beam having a longer wavelength than that of the first light beam; a first photodector; a second photodector; focusing means for focusing the first and second light beams on information recording surfaces of respectively different optical disks; and optical path alteration means for transmitting the first light beam incident from the first light source and the second light beam incident from the second light source to the focusing means and transmitting the first and second light beams incident from the focusing means to the first and second photodetectors, respectively, wherein the optical path alteration means transmits the first and second light beams so that the light quantities of the first and second light beams incident to the optical path alteration means are substantially the same as quantities of the first and second light beams having passed through the optical path alteration means, characterised by further comprising
a phase plate is provided located in the optical path between said optical path alteration means and said focusing means, for converting the linearly polarized first and second light beams incident from said optical path alteration means into circularly polarized first and second light beams, and converting the circularly polarized first and second light beams incident from said focusing means into the linearly polarized first and second light beams, and wherein said optical path alteration means comprises: a first beam splitter for reflecting the first light beam incident from said first light source toward said phase plate, transmitting the first light beam incident from said phase plate toward said first photodetector and transmitting the incident second light beam; and a second beam splitter for reflecting the second light beam incident from said second light source toward said first beam splitter, transmitting the first light beam incident from said first beam splitter toward said first photodetector and reflecting the second light beam incident from said first beam splitter toward said second photodetector.

Preferably, said focusing means comprises: an objective lens; and a holographic variable aperture for totally transmitting the first light beam and transmitting a portion of the second light beam, with respect to the first and second light beams proceeding toward the objective lens.

The head preferably includes a collimating lens for collimating the first and second light beams incident from said optical path alteration means into a parallel light beam and transmitting the same to said holographic [variable iris] variable aperture.

Said first and second beam splitters preferably have polarization beam splitting characteristics which are varied according to the wavelength.

Preferably, said first beam splitter transmits and reflects the linearly polarized first light beam according to the direction of polarization, and transmits the linearly polarized second light beams, and said second beam splitter transmits the linearly polarized first light beam, and reflects the linearly polarized second light beams according to the direction of polarization.

Said second light source and said second photodetector are preferably integrally incorporated into a single unit, and further comprising a holographic beam splitter for transferring the second light beam emitted from said second light source to said second beam splitter and transferring the second light beam incident from said second beam splitter to said second photodetector.

According to a second aspect of the invention an optical recording/pickup head compatible with at least two types of optical disks in which distances from the optical recording/pickup head to the information recording surfaces different from each other and information is recorded and reproduced by light beams having a respectively different wavelength, the optical recording/pickup head comprising:
a first light source for emitting a linearly polarized first light beam;
a second light source for emitting a linearly polarized second light beam having a longer wavelength than that of the first light beam;
a first photodetector;
a second photodetector;
focusing means for focusing the first and second light beams on information recording surfaces of respectively different optical disks; and
optical path alteration means for transmitting the first light beam incident from the first light source and the second light beam incident from the second light source to the focusing means and transmitting the first and second light beams incident from the focusing means to the first and second photodetectors, respectively,
wherein the optical path alteration means transmits the first and second light beams so that the light quantities of the first and second light beams incident to the optical path alteration means are substantially the same as quantities of the first and second light beams having passed through the optical path alteration means, characterised by further comprising
a phase plate located in the optical path between said optical path alteration means and said focusing means, for converting the linearly polarized first and second light beams incident from said optical path alteration means into the circularly polarized first and second light beams, and converting the circularly polarized first and second light beams incident from said focusing means into the linearly polarized first and second light beams, and
wherein said optical path alteration means comprises:
a first beam splitter for reflecting the first light beam incident from said first light source toward said phase plate, transmitting the first light beam incident from said phase plate toward said first photodetector;
a second beam splitter for transmitting the incident first light beam and reflecting the second light beam incident from said second light source toward said phase plate, reflecting the second light beam incident from said phase plate toward said second photodetector.

Said first and second beam splitters preferably have polarization beam splitting characteristics which are varied according to the wavelength.

Preferably, said first beam splitter transmits and reflects the linearly polarized first light beam according to the direction of polarization, and transmits the linearly polarized second light beams, and said second beam splitter transmits the linearly polarized first light beam, and transmits and reflects the linearly polarized second light beams according to the direction of the polarization.

Said second light source and said second photodetector are preferably integrally incorporated into a single unit, and further comprising a holographic beam splitter for transferring the second light beam emitted from said second light source to said second beam splitter and transferring the second light beam incident from said second beam splitter to said second photodetector.

Said optical disks are preferably a CD-R and a DVD.

For a better understanding of the invention, and to show how embodiments of the same may be carried into effect, reference will now be made, by way of example, to the accompanying diagrammatic drawings, in which:
Figure 1 shows an existing optical recording/pickup head compatible with a CD-R and a DVD;
Figure 2 shows the structure of the thin-film type variable aperture used in the optical recording/pickup head of Figure 1;
Figure 3 shows an optical recording/pickup head compatible with a DVD and a CD-R according to an embodiment of the present invention;
Figure 4 shows an optical recording/pickup head compatible with a DVD and a CD-R according to another embodiment of the present invention;
Figure 5 is a graphical view showing optical characteristics of the third beam splitter shown in Figure 3 and 4; and
Figure 6 is a graphical view showing optical characteristics of the fourth beam splitter shown in Figures 3 and 4.

Preferred embodiments of the present invention will be described in detail with reference to the accompanying drawings.

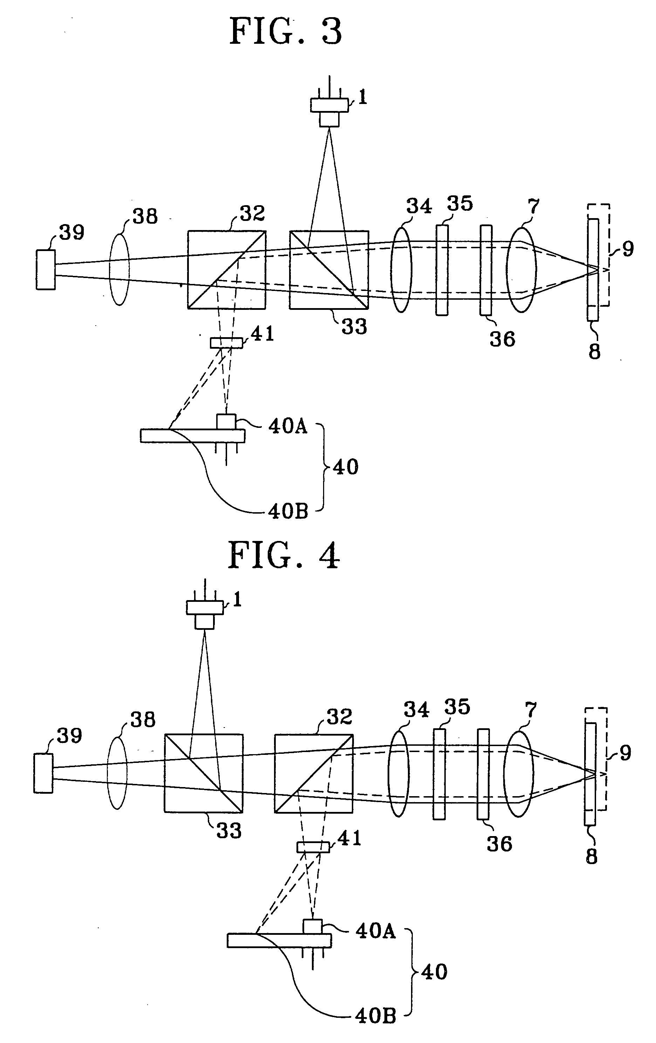

An optical recording/pickup head shown in Figure 3 includes a first light source 1 for emitting a first light beam having a wavelength of 650 nm, a third photodetector 39 for detecting information from the first light beam reflected from a DVD 8, a light source and photodetector 40 in which a light source 40A for emitting a second light beam having a wavelength of 780 nm and a photodetector 40B for detecting information from the second light beam reflected from a CD-R 9, an objective lens 7 for focusing the first and second light beams on the respective information recording surfaces of the optical disks 8 and 9, and two beams splitters 32 and 33 for transmitting the first light beam emitted from the first light source 1 and the second light beam emitted from the second light source and photodetector 40 to the objective lens 7 and transmitting the reflected first and second light beams to the photodetectors 39 and 40B, respectively.

The first light source 1 emits the first light beam which is linearly polarized and has a 650 nm wavelength. For convenience of explanation, the first light beam is defined as an S polarization light beam. The third beam splitter 33 has an optical characteristic that substantially totally reflects an S polarization light beam with respect to the first light beam of 650 nm wavelength, and substantially totally transmits a P polarization light beam, and substantially totally reflects the first light beam incident from the first light source 1 toward a third collimating lens 34. The third collimating lens 34 collimates the first light beam incident from the third beam splitter 33 into a parallel light beam and transmits the collimated first light beam to a phase plate 35. The phase plate 35, is a quarter-wave plate of the same type as the plate 5 of Figure 1 and converts the linearly polarized first light beam incident from the third collimating lens 34 into a circularly polarized light beam and transmits the circularly polarized first light beam to a holographic variable aperture 36.

The holographic variable aperture 36 totally transmits the first light beam being incident in the form of a parallel beam from the phase plate 35 to the objective lens 7. The objective lens 7 focuses the first light beam incident from the holographic variable aperture 36 on the information recording surface of the DVD 8 of 0.6 mm thick. As a result, the first light beam contains information recorded on the focused position on the information recording surface of the DVD 8.

The first light beam reflected from the DVD 8 passes through the objective lens 7, the holographic variable aperture 36, and then is reflected toward the phase plate 35. The phase plate 35 converts the circularly polarized first light beam into the linearly polarized light beam. That is, the first light beam becomes a P polarization light beam by the phase plate 35. The linearly polarized first light beam passes through the third collimating lens 34, and is incident to the third beam splitter 33. The third beam splitter 33 totally transmits the first light beam being a P polarization light beam incident from the third collimating lens 34 to a fourth beam splitter 32. The fourth beam splitter 32 totally transmits the first light beam of the 650 nm wavelength to a photodetection lens 38. The photodetection lens 38 converges the first light beam on a third photodetector 39. The third photodetector 39 detects information from the first light beam incident from the photodetection lens 38.

The light source 40A included in the light source and photodetector 40 emits a second light beam which is linearly polarized and has a wavelength of 780 nm. For convenience of explanation, the second light beam emitted from the light source and photodetector 40 is an S polarization light beam. The fourth beam splitter 32 has an optical characteristic that a P polarization light beam and an S polarization light beam are substantially totally reflected with respect to the second light beam of the 780 nm wavelength, and substantially totally reflects the second light beam incident from the light source and photodetector 40 toward the third beam splitter 33. The third beam splitter 33 totally transmits the second light beam of the 780 nm wavelength incident from the fourth beam splitter 32 to the third collimating lens 34.

The third collimating lens 34 collimates the second light beam incident from the third beam splitter 33 into a parallel light beam and transmits the result to the phase plate 35. The phase plate 35 converts the linearly polarized second light beam incident from the third collimating lens 34 into a circularly polarized light beam and transmits the result to the holographic variable aperture 36. The holographic variable aperture 36 totally transmits the second light beam of 780 nm wavelength incident to a region whose numerical aperture (NA) is less than or equal to 0.36 and transmits about 25% of the second light beam of 780 nm incident to a region whose numerical aperture (NA) is more than or equal to 0.36. The holographic variable aperture 36 transmits a portion of the second light beam incident in parallel from the phase plate 35 and transmits the result to the objective lens 7. The objective lens 7 focuses the second light beam incident from the holographic variable aperture 36 on the information recording surface of the CD-R 9 of 1.2 mm thick. As a result, the second light beam contains information recorded on a focused position on the information recording surface of the CD-R 9.

The second light beam reflected from the CD-R 9 passes through the objective lens 7, the holographic variable aperture 36, and then is incident to the phase plate 35. The phase plate 35 converts the circularly polarized second light beam into the linearly polarized light beam. That is, the second light beams becomes a P polarization light beam by the phase plate 35. The linearly polarized second light beam is transmitted by the third collimating lens 34, and is incident to the third beam splitter 33. The third beam splitter 33 totally transmits the second light beam being a P polarization light beam incident from the third collimating lens 34 to the fourth beam splitter 32. The fourth beam splitter 32 substantially totally transmits the second light beam of the 780 nm wavelength being a P polarization light beam incident from the third beam splitter 33 toward the holographic beam splitter 41.

The holographic beam splitter 41 diffracts the second light beam incident from the fourth beam splitter 32 to then proceed toward the photodetector 40B included in the light source and photodetector 40. The photodetector 40B detects information from the second light beam incident from the holographic beam splitter 41.

Figure 4 shows an optical recording/pickup head compatible with a DVD and a CD-R according to another embodiment of the present invention. When the optical recording/pickup head of Figure 4 is compared with the optical recording/pickup head of Figure 3, the positions of the first light source 1, the light source and photodetector 40 are reversed. As a result, the positions of the third beam splitter 33 and the fourth beam splitter 32 are also reversed.

The positions and functions of other components in Figure 4 are the same as those of Figure 3 which are denoted by the same reference numerals. Thus, the optical recording/pickup head of Figure 4 performs an operation of recording and detecting information on and from the DVD 8 and the CD-R 9, respectively, in the same manner as that of Figure 3.

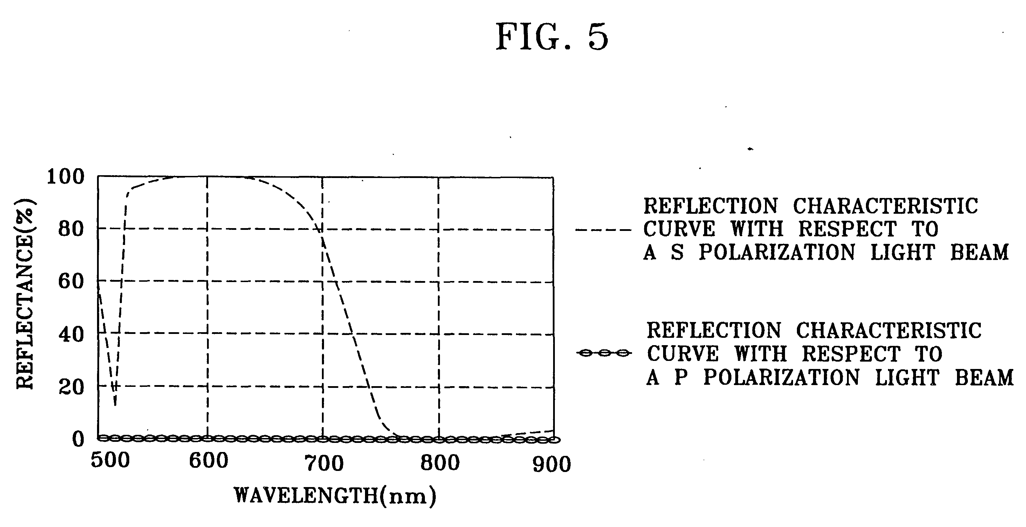

Figure 5 is a graphical view showing optical characteristics of the third beam splitter 33 used in the optical recording/pickup head shown in Figures 3 and 4. In the Figure 5 graphical view, the horizontal axis represents a wavelength of the light and the vertical axis represents a percentage ratio of a reflected light quantity with respect to an incident light quantity. According to a reflection characteristic curve with respect to an S polarization light beam in the graph, it can be seen that the third beam splitter 33 reflects about 99% of an incident S polarization light beam with respect to a wavelength band ranging from about 550 nm to about 650 nm, and transmits almost 100% of an incident S polarization light beam with respect to a wavelength band ranging from about 760 nm to about 900 nm. According to a reflection characteristic curve with respect to a P polarization light beam in the graph, it can be seen that the third beam splitter 33 transmits almost 100% of an incident P polarization light beam with respect to a wavelength band ranging from about 500 nm to about 900 nm.

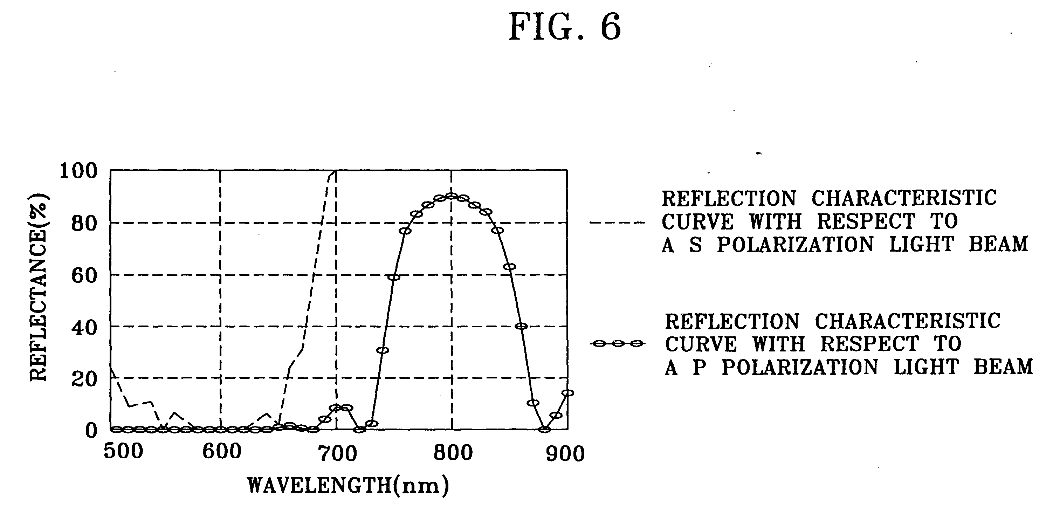

Figure 6 is a graphical view showing optical characteristics of the fourth beam splitter 32 used in the optical recording/pickup head shown in Figures 3 and 4. In the Figure 6 graphical view, the horizontal axis represents a wavelength of the light and the vertical axis represents a percentage ratio of a reflected light quantity with respect to an incident light quantity. According to a reflection characteristic curve with respect to an S polarization light beam in the graph, it can be seen that the fourth beam splitter 32 transmits about 100% of an incident S polarization light beam with respect to a wavelength band in the vicinity of about 650 nm, and reflects almost 100% of an incident S polarization light beam with respect to a wavelength band ranging from about 700 nm to about 900 nm. According to a reflection characteristic curve with respect to a P polarization light beam in the graph, it can be seen that the fourth beam splitter 32 transmits almost 100% of an incident P polarization light beam with respect to a wavelength band less than or equal to about 680 nm and reflects about 90% of an incident P polarization light beam with respect to a wavelength band ranging from about 770 nm to about 830 nm.

As described above, an optical recording/pickup head compatible with a CD-R and a DVD according to the present invention uses two beam splitters 32 and 33, which guide a first light beam and a second light beam emitted from respectively different light sources 1 and 40A toward an objective lens 7, and guide the first and second light beams reflected by optical disks 8 and 9 toward respectively different photodetectors 39 and 40B. The beam splitters 32 and 33 have polarized beam splitting characteristics which are varied according to a wavelength, in which the light quantities of the first and second light beams which are transmitted toward the objective lens 7 by the beam splitters 32 and 33 are substantially the same as those of the first and second light beams which are incident from the first light source 1 and the light source and photodetector 40. The former is preferably more than or equal to about 98% of the latter.

Thus, the optical recording/pickup head according to the present invention does not need to use additional devices such as an interference filter prism 4 and a converging lens 14, which causes a production cost to be lowered. Since the present invention also uses two beam splitters 32 and 33 having a high transmissivity and reflectivity in order to alter an optical path of the first and second light beams, a high light utilization efficiency is provided.

While only certain embodiments of the invention have been specifically described herein it will be apparent that numerous modifications may be made thereto within the scope of the claims.

## Claims

1. An optical recording/pickup head compatible with at least two types of optical disks in which distances from the optical recording/pickup head to the information recording surfaces different from each other and information is recorded and reproduced by light beams having a respectively different wavelength, the optical recording/pickup head comprising:
a first light source (1) for emitting a linearly polarized first light beam;
a second light source (40A) for emitting a linearly polarized second light beam having a longer wavelength than that of the first light beam;
a first photodetector (39);
a second photodetector (40B);
focusing means (7) for focusing the first and second light beams on information recording surfaces of respectively different optical disks (8, 9); and
optical path alteration means (32, 33) for transmitting the first light beam incident from the first light source (1) and the second light beam incident from the second light source (39) to the focusing means (7) and transmitting the first and second light beams incident from the focusing means (7) to the first and second photodetectors (39, 40B), respectively,
wherein the optical path alteration means (32, 33) transmits the first and second light beams so that the light quantities of the first and second light beams incident to the optical path alteration means (32, 33) are substantially the same as quantities of the first and second light beams having passed through the optical path alteration means (32, 33), **characterised by** further comprising
a phase plate (35) located in the optical path between said optical path alteration means (32, 33) and said focusing means (7, 36), for converting the linearly polarized first and second light beams incident from said optical path alteration means (32, 33) into circularly polarized first and second light beams, and converting the circularly polarized first and second light beams incident from said focusing means (7, 36) into the linearly polarized first and second light beams, and
wherein said optical path alteration means (32, 33) comprises:
a first beam splitter (33) for reflecting the first light beam incident from said first light source (1) toward said phase plate (35), transmitting the first light beam incident from said phase plate (35) toward said first photodetector (39) and transmitting the incident second light beam; and
a second beam splitter (32) for reflecting the second light beam incident from said second light source (40A) toward said first beam splitter (33), transmitting the first light beam incident from said first beam splitter (33) toward said first photodetector (39) and reflecting the second light beam incident from said first beam splitter (33) toward said second photodetector (40B).

2. The optical recording/pickup head according to claim 1, wherein said focusing means (7) comprises:
an objective lens (7); and
a holographic variable aperture (36) for totally transmitting the first light beam and transmitting a portion of the second light beam, with respect to the first and second light beams proceeding toward the objective lens (7).

3. The optical recording/pickup head according to claim 1 or 2, further comprising a collimating lens (34) for collimating the first and second light beams incident from said optical path alteration means (32, 33) into a parallel light beam and transmitting the same to said holographic [variable iris] variable aperture (36).

4. The optical recording/pickup head according to any preceding claim, wherein said first and second beam splitters (33, 32) have polarization beam splitting characteristics which are varied according to the wavelength.

5. The optical recording/pickup head according to claim 4, wherein said first beam splitter (33) transmits and reflects the linearly polarized first light beam according to the direction of polarization, and transmits the linearly polarized second light beams, and said second beam splitter (32) transmits the linearly polarized first light beam, and reflects the linearly polarized second light beams according to the direction of polarization.

6. The optical recording/pickup head according to any preceding claim, wherein said second light source (40A) and said second photodetector (40B) is integrally incorporated into a single unit (40), and further comprising a holographic beam splitter (41) for transferring the second light beam emitted from said second light source (40A) to said second beam splitter (32) and transferring the second light beam incident from said second beam splitter (32) to said second photodetector (40B).

7. The optical recording/pickup head according to claim 1, wherein said optical disks are a CD-R and a DVD.

8. An optical recording/pickup head compatible with at least two types of optical disks in which distances from the optical recording/pickup head to the information recording surfaces different from each other and information is recorded and reproduced by light beams having a respectively different wavelength, the optical recording/pickup head comprising:
a first light source (1) for emitting a linearly polarized first light beam;
a second light source (40A) for emitting a linearly polarized second light beam having a longer wavelength than that of the first light beam;
a first photodetector (39);
a second photodetector (40B);
focusing means (7) for focusing the first and second light beams on information recording surfaces of respectively different optical disks (8, 9); and
optical path alteration means (32, 33) for transmitting the first light beam incident from the first light source (1) and the second light beam incident from the second light source (39) to the focusing means (7) and transmitting the first and second light beams incident from the focusing means (7) to the first and second photodetectors (39, 40B), respectively,
wherein the optical path alteration means (32, 33) transmits the first and second light beams so that the light quantities of the first and second light beams incident to the optical path alteration means (32, 33) are substantially the same as quantities of the first and second light beams having passed through the optical path alteration means (32, 33), **characterised by** further comprising
a phase plate (35) located in the optical path between said optical path alteration means (32, 33) and said focusing means (7), for converting the linearly polarized first and second light beams incident from said optical path alteration means (32, 33) into the circularly polarized first and second light beams, and converting the circularly polarized first and second light beams incident from said focusing means (7) into the linearly polarized first and second light beams, and wherein said optical path alteration means (32, 33) comprises:
a first beam splitter (33) for reflecting the first light beam incident from said first light source (1) toward said phase plate (35), transmitting the first light beam incident from said phase plate (35) toward said first photodetector (39);
a second beam splitter (32) for transmitting the incident first light beam and reflecting the second light beam incident from said second light source (40A) toward said phase plate (35), reflecting the second light beam incident from said phase plate (35) toward said second photodetector (40B).

9. The optical recording/pickup head according to claim 8, wherein said first and second beam splitters (33, 32) have polarization beam splitting characteristics which are varied according to the wavelength.

10. The optical recording/pickup head according to claim 9, wherein said first beam splitter (33) transmits and reflects the linearly polarized first light beam according to the direction of polarization, and transmits the linearly polarized second light beams, and said second beam splitter (32) transmits the linearly polarized first light beam, and reflects the linearly polarized second light beams according to the direction of the polarization.

11. The optical recording/pickup head according to claim 8, 9 or 10, wherein said second light source (40A) and said second photodetector (40B) is integrally incorporated into a single unit (40), and further comprising a holographic beam splitter (41) for transferring the second light beam emitted from said second light source (40A) to said second beam splitter and transferring the second light beam incident from said second beam splitter (32) to said second photodetector (40B).

## Patentansprüche

1. Optischer Aufnahme-/Wiedergabekopf kompatibel mit wenigstens zwei Typen von optischen Scheiben, in welchen die Abstände zwischen dem optischen Aufnahme-/Wiedergabekopf und den Oberflächen zum Aufnehmen der Information voneinander verschieden sind und die Information durch Lichtstrahlen, welche jeweils eine unterschiedliche Wellenlänge haben, aufgenommen und wiedergegeben wird, wobei der optische Aufnahme-/Wiedergabekopf aufweist:
eine erste Lichtquelle (1) zur Abstrahlung eines linear polarisierten ersten Lichtstrahls;
eine zweite Lichtquelle (40A) zur Abstrahlung eines linear polarisierten zweiten Lichtstrahls, der eine längere Wellenlänge als die des ersten Lichtstrahls hat;
einen ersten Photodetektor (39);
einen zweiten Photodetektor (40B);
eine fokussierende Vorrichtung (7) zum Fokussieren des ersten und des zweiten Lichtstrahls auf die die Information aufnehmenden Oberflächen von jeweils unterschiedlichen optischen Scheiben (8, 9), und
eine Vorrichtung (32, 33) zum Andern des optischen Pfades zum Durchlassen bzw. Übertragen des ersten Lichtstrahls, der von der ersten Lichtquelle (1) einfällt und des zweiten Lichtstrahls, der von der zweiten Lichtquelle (39) auf die fokussierende Vorrichtung (7) einfällt und zum Durchlassen bzw. Übertragen des ersten und zweiten Lichtstrahls, die von der fokussierenden Vorrichtung (7) einfallen, zu den jeweiligen ersten und zweiten Photodetektoren (39, 40B),
worin die Vorrichtung (32, 33) zum Ändern des optischen Pfades die ersten und zweiten Lichtstrahlen durchlässt, so dass die Lichtmengen der ersten und zweiten Lichtstrahlen, die auf die Vorrichtung (32, 33) zum Ändern des optischen Pfades einfallen im wesentlichen die gleichen sind, wie die Mengen des ersten und zweiten Lichtstrahls, welche die Vorrichtung (32, 33) zum Ändern des optischen Pfades durchlaufen haben, **dadurch gekennzeichnet, dass** sie ferner aufweisen
eine Phasenplatte (35), die im optischen Pfad zwischen der Vorrichtung (32, 33) zum Ändern des optischen Pfades und der fokussierenden Vorrichtung (7, 36) liegt, um die linear polarisierten ersten und zweiten Lichtstrahlen, die von der Vorrichtung (32, 33) zum Ändern des optischen Pfades einfallen in zirkular polarisierte erste und zweite Lichtstrahlen zu wandeln, und die zirkular polarisierten ersten und zweiten Lichtstrahlen, die von der fokussierenden Vorrichtung (7, 36) einfallen, in linear polarisierte erste und zweite Lichtstrahlen umzuwandeln, und
worin die Vorrichtung (32, 33) zum Ändern des optischen Pfades aufweist:
einen ersten Strahlteiler (33) zum Reflektieren des ersten Lichtstrahls, der von der ersten Lichtquelle (1) auf die Phasenplatte (35) einfällt, der den ersten Lichtstrahl, der von der Phasenplatte (35) einfällt zu dem ersten Photodetektor (39) durchlässt und der den einfallenden zweiten Lichtstrahl durchlässt; und
einen zweiten Strahlteiler (32) zum Reflektieren des zweiten Lichtstrahls, der von der zweiten Lichtquelle (40A) auf den ersten Strahlteiler (33) einfällt, der den ersten Lichtstrahl, der vom ersten Strahlteiler (33) einfällt zu dem ersten Photodetektor (39) durchlässt und der den zweiten Lichtstrahl, der vom ersten Strahlteiler (33) auf den zweiten Photodetektor (40B) einfällt, reflektiert.

2. Optischer Aufnahme-/Wiedergabekopf nach Anspruch 1, in welchem die fokussierende Vorrichtung (7) aufweist:
ein Objektiv (7); und
eine holografische variable Apertur (36), um den ersten Lichtstrahl total durchzulassen und einen Teil des zweiten Lichtstrahls durchzulassen, unter Beachtung der ersten und zweiten Lichtstrahlen, die auf das Objektiv (7) zulaufen.

3. Optischer Aufnahme-/Wiedergabekopf nach Anspruch 1 oder 2, welcher ferner aufweist eine Kollimatorlinse (34) zum Kollimieren der ersten und zweiten Lichtstrahlen, die von der Vorrichtung (32, 33) zum Ändern des optischen Pfades einfallen, zu einem parallelen Lichtstrahl und zum Durchlassen desselben zur holografischen [variable Iris] variablen Apertur (36).

4. Optischer Aufnahme-/Wiedergabekopf nach irgendeinem vorherigen Anspruch, in welchem der erste und zweite Strahlteiler (33, 32) Teilercharakteristiken für polarisierende Strahlung aufweisen, welche entsprechend der Wellenlänge variiert werden.

5. Optischer Aufnahme-/Wiedergabekopf nach Anspruch 4, in welchem der erste Strahlteiler (33) den linear polarisierten ersten Lichtstrahl entsprechend der Polarisationsrichtung durchlässt und reflektiert, und den zweiten linear polarisierten Lichtstrahl durchlässt, und der zweite Strahlteiler (32) den linear polarisierten ersten Lichtstrahl durchlässt, und den linear polarisierten zweiten Lichtstrahl entsprechend der Polarisationsrichtung reflektiert.

6. Optischer Aufnahme-/Wiedergabekopf nach irgendeinem vorherigen Anspruch, in welchem die zweite Lichtquelle (40A) und der zweite Photodetektor (40B) integral in eine einzelne Einheit (40) eingebaut sind, und welcher ferner einen holografischen Strahlteiler (41) aufweist, um den zweiten Lichtstrahl, der von der zweiten Lichtquelle (40A) abgestrahlt wird, zum zweiten Strahlteiler (32) zu übertragen und um den zweiten Lichtstrahl, der von dem zweiten Strahlteiler (32) auf den zweiten Photodetektor (40B) einfällt, zu übertragen.

7. Optischer Aufnahme-/Wiedergabekopf nach Anspruch 1, in welchem die optischen Scheiben eine CD-R (Compact-Disc beschreibbar) und eine DVD (Digital vielseitige Scheibe) ist.

8. Optischer Aufnahme-/Wiedergabekopf kompatibel mit wenigstens zwei Typen von optischen Scheiben, in welchen die Abstände zwischen dem optischen Aufnahme-/Wiedergabekopf und den Oberflächen zum Aufnehmen der Information voneinander verschieden sind und die Information durch Lichtstrahlen, welche jeweils eine unterschiedliche Wellenlänge haben, aufgenommen und wiedergegeben wird, wobei der optische Aufnahme-/Wiedergabekopf aufweist:
eine erste Lichtquelle (1) zur Abstrahlung eines linear polarisierten ersten Lichtstrahls;
eine zweite Lichtquelle (40A) zur Abstrahlung eines linear polarisierten zweiten Lichtstrahls, der eine längere Wellenlänge als die des ersten Lichtstrahls hat;
einen ersten Photodetektor (39) ;
einen zweiten Photodetektor (40B) ;
eine fokussierende Vorrichtung (7) zum Fokussieren des ersten und des zweiten Lichtstrahls auf die die Information aufnehmenden Oberflächen von jeweils unterschiedlichen optischen Scheiben (8, 9), und
eine Vorrichtung (32, 33) zum Ändern des optischen Pfades zum Durchlassen des ersten Lichtstrahls, der von der ersten Lichtquelle (1) einfällt und des zweiten Lichtstrahls, der von der zweiten Lichtquelle (39) auf die fokussierende Vorrichtung (7) einfällt und zum Durchlassen des ersten und zweiten Lichtstrahls, die von der fokussierenden Vorrichtung (7) einfallen, zu den jeweiligen ersten und zweiten Photodetektoren (39, 40B),
worin die Vorrichtung (32, 33) zum Ändern des optischen Pfades die ersten und zweiten Lichtstrahlen durchlässt, so dass die Lichtmengen der ersten und zweiten Lichtstrahlen, die auf die Vorrichtung (32, 33) zum Ändern des optischen Pfades einfallen im wesentlichen die gleichen sind, wie die Mengen des ersten und zweiten Lichtstrahls, welche die Vorrichtung (32, 33) zum Ändern des optischen Pfades durchlaufen haben, **dadurch gekennzeichnet, dass** sie ferner aufweisen
eine Phasenplatte (35), die im optischen Pfad zwischen der Vorrichtung (32, 33) zum Ändern des optischen Pfades und der fokussierenden Vorrichtung (7) liegt, um die linear polarisierten ersten und zweiten Lichtstrahlen, die von der Vorrichtung (32, 33) zum Ändern des optischen Pfades einfallen in zirkular polarisierte erste und zweite Lichtstrahlen zu wandeln, und die zirkular polarisierten ersten und zweiten Lichtstrahlen, die von der fokussierenden Vorrichtung (7) einfallen, in linear polarisierte erste und zweite Lichtstrahlen umzuwandeln, und
worin die Vorrichtung (32, 33) zum Ändern des optischen Pfades aufweist:
einen ersten Strahlteiler (33) zum Reflektieren des ersten Lichtstrahls, der von der ersten Lichtquelle (1) auf die Phasenplatte (35) einfällt, der den ersten Lichtstrahl, der von der Phasenplatte (35) einfällt zu dem ersten Photodetektor (39) durchlässt;
einen zweiten Strahlteiler (32) zum Durchlassen des einfallenden ersten Lichtstrahls und zum Reflektieren des zweiten Lichtstrahls, der von der zweiten Lichtquelle (40A) auf die Phasenplätte (35) einfällt, welche den zweiten Lichtstrahl, der von der Phasenplatte (35) auf den zweiten Photodetektor (40B) einfällt, reflektiert.

9. Optischer Aufnahme-/Wiedergabekopf nach Anspruch 8, in welchem der erste und zweite Strahlteiler (33, 32) Teilercharakteristiken für polarisierende Strahlung aufweisen, welche entsprechend der Wellenlänge variiert werden.

10. Optischer Aufnahme-/Wiedergabekopf nach Anspruch 9, in welchem der erste Strahlteiler (33) den linear polarisierten ersten Lichtstrahl entsprechend der Polarisationsrichtung durchlässt und reflektiert, und die zweiten linear polarisierten Lichtstrahlen durchlässt, und der zweite Strahlteiler (32) den linear polarisierten ersten Lichtstrahl durchlässt, und die linear polarisierten zweiten Lichtstrahlen entsprechend der Polarisationsrichtung reflektiert.

11. Optischer Aufnahme-/Wiedergabekopf nach Anspruch 8, 9 oder 10, in welchem die zweite Lichtquelle (40A) und der zweite Photodetektor (40B) integral in eine einzelne Einheit (40) eingebaut sind, und welcher ferner einen holografischen Strahlteiler (41) aufweist, um den zweiten Lichtstrahl, der von der zweiten Lichtquelle (40A) abgestrahlt wird, zum zweiten Strahlteiler zu übertragen und um den zweiten Lichtstrahl, der von dem zweiten Strahlteiler (32) auf den zweiten Photodetektor (40B) einfällt, zu übertragen.

## Revendications

1. Tête d'enregistrement/lecture optique compatible avec au moins deux types de disques optiques, dans laquelle les distances entre ladite tête et les surfaces d'enregistrement d'informations sont différentes et les informations sont enregistrées et reproduites par des faisceaux lumineux présentant des longueurs d'ondes respectivement différentes, ladite tête d'enregistrement/ lecture optique comprenant :
une première source lumineuse (1) destinée à émettre un premier faisceau lumineux à polarisation rectiligne ;
une seconde source lumineuse (40A) destinée à émettre un second faisceau lumineux à polarisation rectiligne et présentant une longueur d'onde supérieure à celle du premier faisceau lumineux ;
un premier photodétecteur (39) ;
un second photodétecteur (40B) ;
des moyens de focalisation (7) destinés à focaliser les premier et second faisceaux lumineux sur des surfaces d'enregistrement d'informations de disques optiques respectivement différents (8, 9) ; et
des moyens de modification de trajet optique (32, 33) destinés à transmettre le premier faisceau lumineux provenant de la première source lumineuse (1) et le second faisceau lumineux provenant de la seconde source lumineuse (39) aux moyens de focalisation (7), et à transmettre les premier et second faisceaux lumineux provenant des moyens de focalisation (7) aux premier et second photodétecteurs (39, 40B), respectivement,
étant précisé que les moyens de modification de trajet optique (32, 33) transmettent les premier et second faisceaux lumineux de telle sorte que les quantités de lumière des premier et second faisceaux lumineux qui arrivent sur lesdits moyens de modification de trajet optique (32, 33) sont sensiblement les mêmes que celles des premier et second faisceaux lumineux qui ont traversé les moyens de modification de trajet optique (32, 33), **caractérisée en ce qu'**elle comprend également
une lamelle de phase (35) située sur le trajet optique entre les moyens de modification de trajet optique (32, 33) et les moyens de focalisation (7, 36) et destinée à convertir les premier et second faisceaux lumineux, à polarisation rectiligne, provenant des moyens de modification (32, 33) en premier et second faisceaux lumineux à polarisation circulaire, et à convertir lesdits premier et second faisceaux lumineux à polarisation circulaire provenant des moyens de focalisation (7, 36) en premier et second faisceaux lumineux à polarisation rectiligne, et
dans laquelle les moyens de modification de trajet optique (32, 33) comprennent :
un premier fractionneur de faisceau (33) destiné à réfléchir le premier faisceau lumineux provenant de la première source lumineuse (1) vers la lamelle de phase (35), à transmettre le premier faisceau lumineux provenant de la lamelle de phase (35) vers le premier photodétecteur (39) et à transmettre le second faisceau lumineux incident; et
un second fractionneur de faisceau (32) destiné à réfléchir le second faisceau lumineux provenant de la seconde source lumineuse (40A) vers le premier fractionneur de faisceau (33), à transmettre le premier faisceau lumineux provenant du premier fractionneur (33) vers le premier photodétecteur (39) et à réfléchir le second faisceau lumineux provenant du premier fractionneur de faisceau (33) vers le second photodétecteur (40B).

2. Tête d'enregistrement/lecture optique selon la revendication 1, dans lequel les moyens de focalisation (7) comprennent :
une lentille d'objectif (7) ; et
une ouverture holographique variable (36) destinée à transmettre entièrement le premier faisceau lumineux et à transmettre une partie du second faisceau lumineux, par rapport aux premier et second faisceaux lumineux dirigés vers ladite lentille d'objectif (7).

3. Tête d'enregistrement/lecture optique selon la revendication 1 ou 2, comprenant également une lentille de collimation (34) destinée à la collimation des premier et second faisceaux lumineux provenant des moyens de modification de trajet optique (32, 33) en un faisceau lumineux parallèle, et à la transmission de celui-ci à l'ouverture holographique variable [iris variable] (36).

4. Tête d'enregistrement/lecture optique selon l'une quelconque des revendications précédentes, dans laquelle les premier et second fractionneurs de faisceaux (33, 32) ont des caractéristiques de fractionnement de faisceau de polarisation qui varient suivant la longueur d'onde.

5. Tête d'enregistrement/lecture optique selon la revendication 4, dans laquelle le premier fractionneur de faisceau (33) transmet et réfléchit le premier faisceau lumineux à polarisation rectiligne suivant la direction de polarisation, et transmet les seconds faisceaux lumineux à polarisation rectiligne, tandis que le second fractionneur de faisceau (32) transmet le premier faisceau lumineux à polarisation rectiligne et réfléchit les seconds faisceaux lumineux à polarisation rectiligne selon la direction de polarisation.

6. Tête d'enregistrement/lecture optique selon l'une quelconque des revendications précédentes, dans laquelle la seconde source lumineuse (40A) et le second photodétecteur (40B) forment une seule unité (40), et comprenant également un fractionneur de faisceau holographique (41) destiné à transférer le second faisceau lumineux émis par la seconde source lumineuse (40A) au second fractionneur de faisceau (32) et à transférer le second faisceau lumineux provenant du second fractionneur de faisceau (32) au second photodétecteur (40B).

7. Tête d'enregistrement/lecture optique selon la revendication 1, dans laquelle les disques optiques sont un CD-R et un DVD.

8. Tête d'enregistrement/lecture optique compatible avec au moins deux types de disques optiques, dans laquelle les distances entre ladite tête et les surfaces d'enregistrement d'informations sont différentes et les informations sont enregistrées et reproduites par des faisceaux lumineux présentant des longueurs d'ondes respectivement différentes, ladite tête d'enregistrement/ lecture optique comprenant :
une première source lumineuse (1) destinée à émettre un premier faisceau lumineux à polarisation rectiligne ;
une seconde source lumineuse (40A) destinée à émettre un second faisceau lumineux à polarisation rectiligne et présentant une longueur d'onde supérieure à celle du premier faisceau lumineux ;
un premier photodétecteur (39) ;
un second photodétecteur (40B) ;
des moyens de focalisation (7) destinés à focaliser les premier et second faisceaux lumineux sur des surfaces d'enregistrement d'informations de disques optiques respectivement différents (8, 9) ; et
des moyens de modification de trajet optique (32, 33) destinés à transmettre le premier faisceau lumineux provenant de la première source lumineuse (1) et le second faisceau lumineux provenant de la seconde source lumineuse (39) aux moyens de focalisation (7), et à transmettre les premier et second faisceaux lumineux provenant des moyens de focalisation (7) aux premier et second photodétecteurs (39, 40B), respectivement,
étant précisé que les moyens de modification de trajet optique (32, 33) transmettent les premier et second faisceaux lumineux de telle sorte que les quantités de lumière des premier et second faisceaux lumineux qui arrivent sur lesdits moyens de modification de trajet optique (32, 33) sont sensiblement les mêmes que celles des premier et second faisceaux lumineux qui ont traversé les moyens de modification de trajet optique (32, 33), **caractérisée en ce qu'**elle comprend également
une lamelle de phase (35) située sur le trajet optique entre les moyens de modification de trajet optique (32, 33) et les moyens de focalisation (7) et destinée à convertir les premier et second faisceaux lumineux, à polarisation rectiligne, provenant des moyens de modification (32, 33) en premier et second faisceaux lumineux à polarisation circulaire, et à convertir lesdits premier et second faisceaux lumineux à polarisation circulaire provenant des moyens de focalisation (7) en premier et second faisceaux lumineux à polarisation rectiligne, et
dans laquelle les moyens de modification de trajet optique (32, 33) comprennent :
un premier fractionneur de faisceau (33) destiné à réfléchir le premier faisceau lumineux provenant de la première source lumineuse (1) vers la lamelle de phase (35) et à transmettre le premier faisceau lumineux provenant de la lamelle de phase (35) vers le premier photodétecteur (39) ; et
un second fractionneur de faisceau (32) destiné à transmettre le premier faisceau lumineux incident et à réfléchir le second faisceau lumineux provenant de la seconde source lumineuse (40A) vers ladite lamelle de phase (35) et à réfléchir le second faisceau lumineux provenant de ladite lamelle de phase (35) vers le second photodétecteur (40B).

9. Tête d'enregistrement/lecture optique selon la revendication 8, dans laquelle les premier et second fractionneurs de faisceaux (33, 32) ont des caractéristiques de fractionnement de faisceau de polarisation qui varient selon la longueur d'onde.

10. Tête d'enregistrement/lecture optique selon la revendication 9, dans laquelle le premier fractionneur de faisceau (33) transmet et réfléchit le premier faisceau lumineux à polarisation rectiligne selon la direction de polarisation et transmet les seconds faisceaux lumineux à polarisation rectiligne, tandis que le second fractionneur de faisceau (32) transmet le premier faisceau lumineux à polarisation rectiligne et réfléchit les seconds faisceaux lumineux à polarisation rectiligne suivant la direction de la polarisation.

11. Tête d'enregistrement/lecture optique selon la revendication 8, 9 ou 10, dans laquelle la seconde source lumineuse (40A) et le second photodétecteur (40B) forment une seule unité (40), et comprenant également un fractionneur de faisceau holographique (41) destiné à transférer le second faisceau lumineux émis par la seconde source lumineuse (40A) au second fractionneur de faisceau, et à transférer le second faisceau lumineux provenant du second fractionneur de faisceau (32) au second photodétecteur (40B).
